# FASCICULE DE BREVET EUROPEEN

(11) **EP 2 834 135 B1**
(45) Date de publication et mention de la délivrance du brevet: **13.02.2019**
(21) Numéro de dépôt: 13715368.0
(22) Date de dépôt: 21.03.2013
(51) Int. Cl.: B62D 25/20, B62D 25/02, B62D 21/15

(54) **CLOISON DE PIED MILIEU AFFAIBLIE EN Y ET RENFORCEE EN Z**
B-FUSSSÄULE MIT EINER IN Y-RICHTUNG GESCHWÄCHTEN UND IN Z-RICHTUNG VERSTÄRKTEN TRENNWAND
B-PILLAR LOWER BULKHEAD PARTITION WEAKENED IN THE Y DIRECTION AND REINFORCED IN THE Z DIRECTION

(30) Priorité: 04.04.2012 FR 1253100
(43) Date de publication de la demande: 11.02.2015
(73) Titulaire: PSA Automobiles SA, 78300 Poissy (FR)
(72) Inventeur: BOUQUIN, Gregory, 25260 Saint Maurice Colombier (FR)
(86) Numéro de dépôt international: PCT/FR2013/050612
(87) Numéro de publication internationale: WO 2013/150209

(56) Documents cités:
- EP-A1- 2 388 183
- EP-A2- 0 825 096
- DE-A1- 19 528 874
- JP-A- 2000 085 634
- JP-A- 2000 177 631
- US-A1- 2011 210 581

## Description

L'invention a trait au domaine de l'automobile, et plus précisément à la rigidification des caisses de véhicules automobiles en vue de les rendre plus résistantes aux chocs, et notamment aux chocs latéraux.

La caisse d'un véhicule automobile ayant deux rangées de sièges comprend généralement, entre les deux rangées (c'est-à-dire derrière la rangée de sièges avant) une traverse centrale, qui relie des longerons délimitant le plancher de caisse, et une paire de montants centraux appelés montants B ou pieds milieux solidaires des longerons au droit de la traverse centrale.

Chaque pied milieu est creux, pour pouvoir recevoir des équipements tels qu'un enrouleur de ceinture de sécurité ou un câblage électrique par exemple pour un lève-vitre ou un éclairage de seuil d'une porte latérale arrière.

Le pied milieu a pour principale fonction d'assurer une reprise d'effort en cas de choc latéral ou de retournement subi par le véhicule. Afin d'améliorer la tenue du pied milieu à l'effort sans en accroître substantiellement la masse, il est connu de le raidir localement au moyen de renforts, cf. par ex. le brevet français FR 2 946 607 ou le document JP 2000 177631 A.

On sait toutefois qu'il n'est pas suffisant de raidir la caisse pour protéger les passagers de l'habitacle, mais qu'il est préférable d'autoriser une déformation programmée de certains composants, de sorte à absorber une partie de l'énergie du choc tout en constituant des voies d'effort privilégiées vers des composants structurels dimensionnés pour résister aux déformations.

Un premier objectif est de munir la caisse d'un véhicule automobile, au niveau de la jonction entre un pied milieu et un longeron, d'un composant assurant une certaine absorption des chocs.

Un deuxième objectif est de définir des voies d'effort privilégiées à cette même jonction.

Un troisième objectif est d'améliorer le comportement aux chocs de la caisse à masse équivalente, ou à maintenir ce comportement en allégeant la caisse.

Un quatrième objectif est d'améliorer la compressibilité transversale du pied milieu tout en augmentant localement sa rigidité suivant une direction verticale.

Il est proposé, en premier lieu, une cloison de bas de pied milieu d'une caisse de véhicule automobile, qui comprend un profilé métallique à section horizontale en U, muni d'une paroi longitudinale et de deux parois transversales en regard, chaque paroi transversale étant percée d'au moins deux paires de trous superposés, séparées par une bande centrale continue de matière qui s'étend d'un bord inférieur à un bord supérieur de la paroi transversale.

Interposée au droit d'une traverse centrale, entre un pied milieu et un longeron d'une caisse de véhicule automobile, cette cloison présente l'avantage d'offrir, lors d'un choc latéral, une bonne compressibilité transversale grâce aux deux paires de trous qui constituent des zones de faiblesse, ce qui permet d'absorber une partie de l'énergie du choc, tout en présentant une bonne raideur verticale, grâce à la bande centrale de matière, ce qui limite la déformation du longeron et accroît ainsi la résistance aux chocs de celui-ci.

Diverses caractéristiques supplémentaires peuvent être prévues, seules ou en combinaison :
- les trous situés du côté de la paroi longitudinale sont oblongs suivant une direction transversale ;
- les trous situés à l'opposé de la paroi longitudinale sont oblongs suivant une direction verticale ;
- le bord inférieur de chaque paroi transversale présente un repli en équerre à l'aplomb de la bande centrale de matière ;
- le bord supérieur de chaque paroi transversale présente un repli en équerre à l'aplomb de la bande centrale de matière ;
- chaque paroi transversale comprend, à l'opposé de la paroi longitudinale, un bord interne muni d'un repli en équerre percé d'un trou pour le passage de vis de fixation à un longeron ;
- la cloison est réalisée de manière monobloc dans une tôle d'acier.

Il est proposé, en deuxième lieu, une caisse de véhicule automobile, qui comprend un longeron, une traverse centrale et un pied milieu monté sur le longeron au droit de la traverse centrale, ainsi qu'une une cloison telle que présentée ci-dessus, interposée entre le pied milieu et le longeron.

Le longeron se présente par exemple sous forme d'un profilé à section transversale en U, comprenant une paroi intérieure longitudinale, une paroi inférieure et une paroi supérieure s'étendant sensiblement horizontalement de part et d'autre de la paroi intérieure. Dans ce cas, la cloison peut par exemple être fixée par vissage sur la paroi intérieure du longeron, et par soudage sur la paroi inférieure et sur la paroi supérieure du longeron.

Il est proposé, en troisième lieu, un véhicule automobile comprenant une telle caisse.

D'autres objets et avantages de l'invention apparaîtront à la lumière de la description d'un mode préféré de réalisation, faite ci-après en référence aux dessins annexés dans lesquels :
- la figure 1 est une vue en perspective partielle montrant, de l'extérieur, une caisse de véhicule automobile, centrée sur le voisinage d'une jonction entre un pied milieu et une traverse centrale ;
- la figure 2 est une vue en perspective partielle montrant la caisse de la figure 1 vue par l'intérieur ;
- la figure 3 est une vue de détail en perspective montrant une cloison de bas de pied milieu ;
- la figure 4 est une vue en coupe partielle montrant la caisse des figures 1 et 2 ;
- la figure 5 est une vue en perspective illustrant l'assemblage des différents composants de la caisse, notamment le pied milieu, le longeron et la cloison.

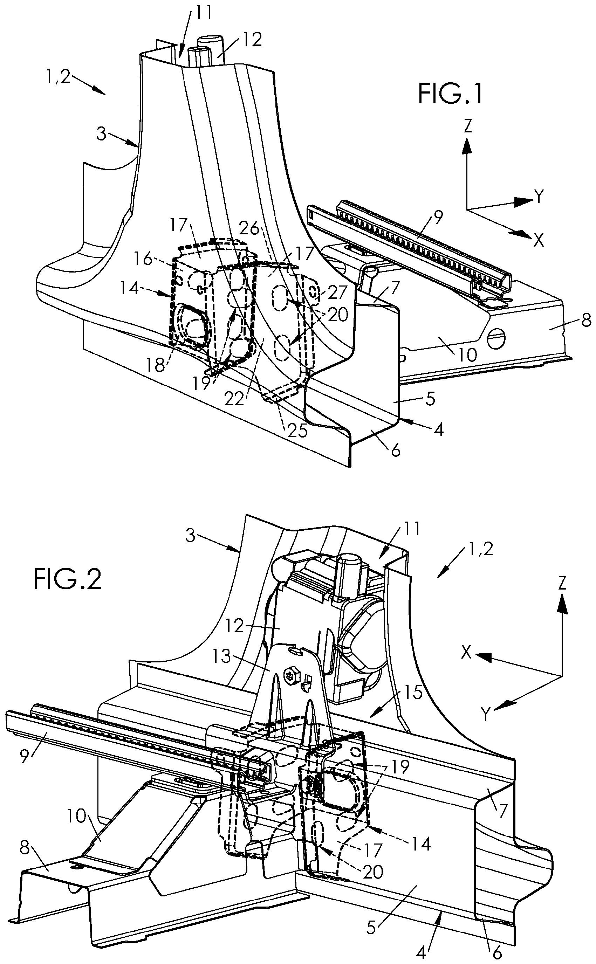

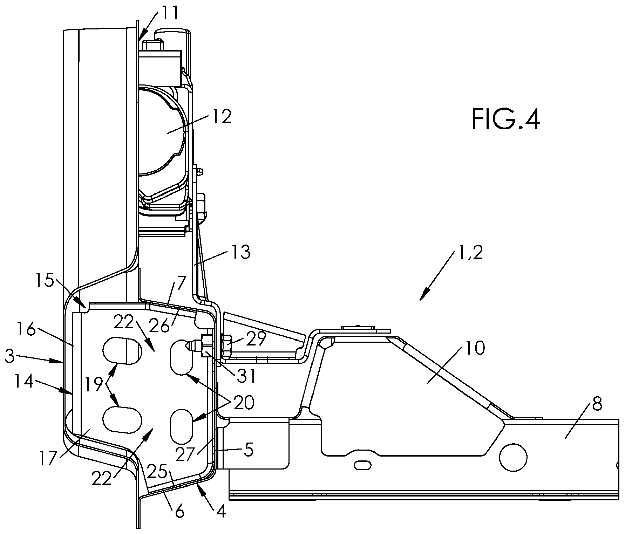

Sur les figures 1, 2, 4 et 5 est partiellement représentée une caisse 1 d'un véhicule automobile particulier, tel qu'une berline, comprenant deux rangées de sièges séparées par une structure 2 centrale de renfort. Cette structure 2 comprend un pied 3 milieu reliant un longeron 4 à un brancard latéral (non représenté) qui, compte tenu des lignes tendues de la majorité des véhicules modernes, peut être intégré à un montant de la baie de pare-brise du véhicule.

On définit par rapport à la caisse 1 un repère orthogonal XYZ comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal,
- un axe Z, définissant une direction verticale, perpendiculaire au plan XY horizontal.

Comme cela est visible sur la figure 1, le pied 3 milieu, qui est de préférence réalisé par emboutissage d'une tôle d'acier, présente à sa partie inférieure un profil élargi en T pour son raccordement au longeron 4.

Le longeron 4 se présente sous forme d'un profilé métallique (de préférence en acier) creux ouvert et présente en section transversale (suivant YZ) un profil en U s'ouvrant vers l'extérieur du véhicule. Plus précisément, le longeron 4 comprend une paroi 5 intérieure à la fois longitudinale et verticale (c'est-à-dire parallèle au plan XZ), ainsi qu'une paroi 6 inférieure et une paroi 7 supérieure qui s'étendent toutes deux sensiblement longitudinalement et horizontalement (parallèlement au plan XY), de part et d'autre de la paroi 5 intérieure.

La structure 2 centrale comprend en outre une traverse 8 centrale, qui s'étend d'un longeron 4 à l'autre et forme ainsi une jambe de force qui limite la déformabilité de l'habitacle en cas de choc latéral.

Comme on le voit notamment sur les figures 1 et 2, la traverse 8 centrale supporte un rail 9 de coulissement d'un siège avant (non représenté), par l'intermédiaire d'un sabot 10 fixé sur la traverse 8, au voisinage de sa jonction avec le longeron 4.

Le pied 3 est creux du côté intérieur du véhicule, et définit au-dessus du longeron un logement 11 propre à accueillir un enrouleur 12 de ceinture de sécurité, lequel est monté sur le longeron 4 par l'intermédiaire d'une équerre 13 fixée sur celui-ci.

La structure 2 centrale comprend en outre une cloison 14 de bas de pied milieu (en pointillés sur les figures 1 et 2), reçue dans une réserve 15 en creux délimitée conjointement extérieurement par le pied 3 milieu, et intérieurement par le longeron 4, au droit de la traverse 8 centrale.

Cette cloison 14 est munie (ou est constituée, comme dans l'exemple illustré) d'un profilé métallique à section horizontale en U, qui comprend une paroi 16 longitudinale (suivant XZ) et deux parois 17 transversales (suivant YZ) en regard. Ce profilé est par exemple réalisé de manière monobloc dans une tôle d'acier, par découpage, pliage et/ou emboutissage.

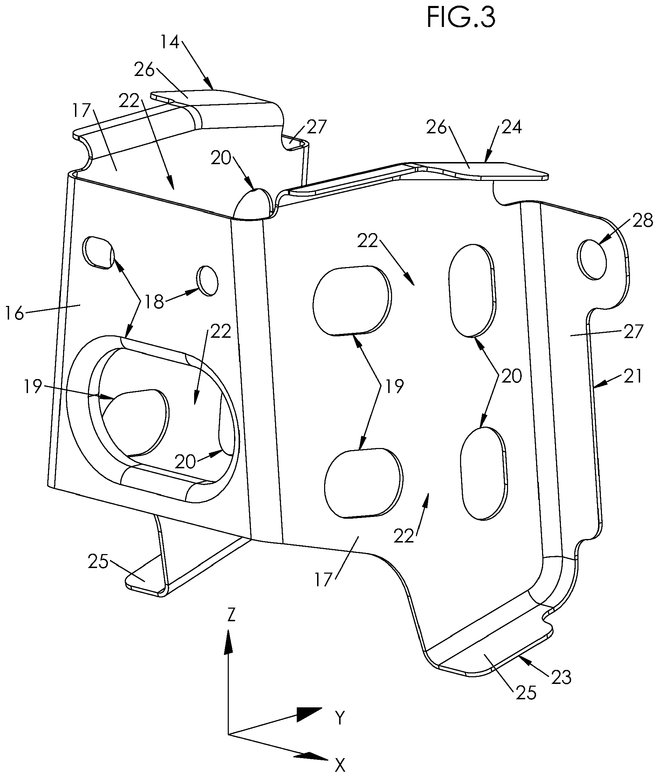

Selon un exemple particulier de réalisation, illustré sur les figures (et plus particulièrement visible sur la figure 3), la paroi 16 longitudinale est découpée d'ajours 18 ayant une fonction d'allégement de la cloison 14.

Par ailleurs, comme on le voit bien sur la figure 3, chaque paroi 17 transversale est percée d'au moins deux paires de trous superposés, à savoir une paire de trous 19 externes, situés du côté de la paroi 16 longitudinale, et une paire de trous 20 internes, situés à l'opposé de la paroi 16 longitudinale, du côté d'un bord 21 interne de la paroi 17 transversale.

Ces deux paires de trous 19, 20 sont séparées par une bande 22 centrale continue de matière qui s'étend d'un bord 23 inférieur à un bord 24 supérieur de la paroi 17 transversale.

Selon un mode de réalisation préféré illustré sur les figures, les trous 19 externes sont oblongs suivant la direction transversale (c'est-à-dire suivant Y), tandis que les trous 20 internes sont oblongs suivant la direction verticale (c'est-à-dire suivant Z).

Comme on le voit sur la figure 3, le bord 23 inférieur et le bord 24 supérieur de chaque paroi 17 transversale présentent respectivement, à l'aplomb de la bande 22 centrale de matière, un repli 25 en équerre inférieur et un repli 26 en équerre supérieur.

En outre, chaque paroi 17 transversale comprend, sur son bord 21 interne, un repli 27 en équerre intérieur percé d'un trou 28 pour le passage d'une vis 29 de fixation au longeron 4 selon des modalités exposées ci-dessous.

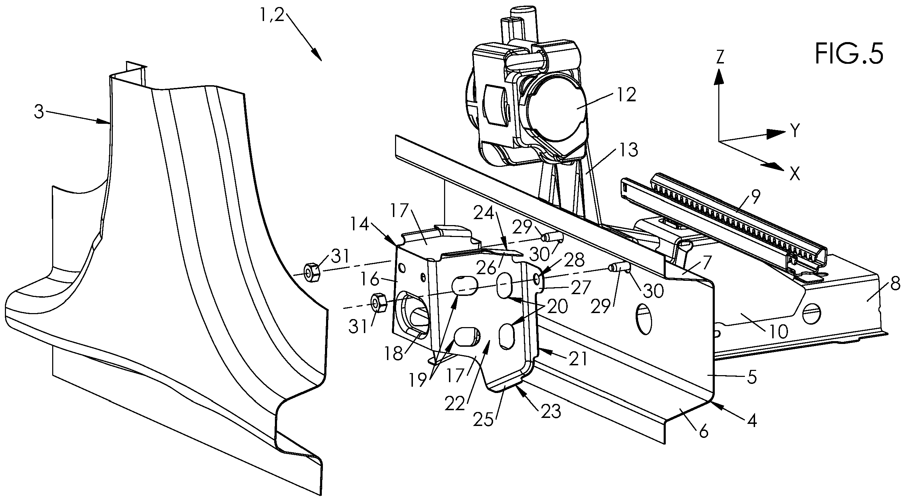

L'assemblage de la structure 2 centrale de renfort est réalisé comme suit (cf. la figure 5).

La traverse 8, le rail 9, le sabot 10, l'enrouleur 12 et l'équerre 13 étant supposés préassemblés et fixés sur le longeron 4, on commence par placer la cloison 14 au droit du longeron 4 en positionnant les trous 28 dans l'axe de trous 30 correspondants formés dans la paroi 5 intérieure du longeron 4.

Puis on fixe la cloison 14 sur le longeron 4 au moyen des vis 29 traversant les trous 28, 30, et d'écrous 31 boulonnés sur les vis 29. Il est préférable, pour rigidifier cette fixation, de la compléter en soudant (par exemple par soudage électrique) les replis 25, 26 en équerre inférieurs et supérieurs respectivement sur la paroi 6 inférieure et sur la paroi 7 supérieure du longeron 4.

La cloison 14 ainsi fixée sur le longeron 4, il reste à monter le pied 3 milieu sur le longeron 4 en recouvrant la cloison 14, laquelle se trouve in fine interposée entre le pied 3 milieu et le longeron 4, au droit de la traverse 8 centrale.

Cette structure 2 centrale de renfort présente les avantages suivants.

Premièrement, les trous 19, 20 formés dans les parois 17 transversales de la cloison 14 permettent d'alléger celle-ci, au bénéfice de la masse totale de la caisse 1.

Deuxièmement, les deux paires de trous 19, 20 constituent des zones de faiblesse qui confèrent à la cloison 14 une bonne compressibilité transversale (suivant Y) lors d'un choc latéral, la cloison 14 absorbant par sa compression une partie de l'énergie du choc.

Troisièmement, la bande 22 centrale de matière confère à la cloison 14 une bonne raideur verticale (suivant Z), qui limite sa compressibilité verticale. La cloison 14 étant emboîtée dans le longeron 4, dont elle est complémentaire en forme, elle constitue pour celui-ci un raidisseur et lui confère une bonne résistance à la compression verticale.

Il en résulte pour la structure 2 centrale de renfort, d'abord une meilleure capacité d'absorption de l'énergie d'un choc latéral en début de choc, ensuite une meilleure capacité de transmission des efforts en fin de choc aux éléments structurels (essentiellement la traverse 8) conçus pour résister aux efforts de compression et/ou de flambage, au bénéfice de la préservation de l'habitacle et de la sécurité de ses occupants.

## Revendications

1. Cloison (14) de bas de pied (3) milieu d'une caisse (1) de véhicule automobile, qui comprend un profilé métallique à section horizontale en U, muni d'une paroi (16) longitudinale et de deux parois (17) transversales en regard, **caractérisé en ce que** chaque paroi (17) transversale est percée d'au moins deux paires de trous (19, 20) superposés, séparées par une bande (22) centrale continue de matière qui s'étend d'un bord (23) inférieur à un bord (24) supérieur de la paroi (17) transversale.

2. Cloison (14) selon la revendication 1, **caractérisée en ce que** les trous (19) situés du côté de la paroi (16) longitudinale sont oblongs suivant une direction transversale.

3. Cloison (14) selon la revendication 1 ou la revendication 2, **caractérisée en ce que** les trous (20) situés à l'opposé de la paroi (16) longitudinale sont oblongs suivant une direction verticale.

4. Cloison (14) selon l'une des revendications précédentes, **caractérisé en ce que** le bord (23) inférieur de chaque paroi (17) transversale présente un repli (25) en équerre à l'aplomb de la bande (22) centrale de matière.

5. Cloison (14) selon l'une des revendications précédentes, **caractérisé en ce que** le bord (24) supérieur de chaque paroi (17) transversale présente un repli (26) en équerre à l'aplomb de la bande (22) centrale de matière.

6. Cloison (14) selon l'une des revendications précédentes, **caractérisé en ce que** chaque paroi (17) transversale comprend, à l'opposé de la paroi (16) longitudinale, un bord (21) interne muni d'un repli (27) en équerre percé d'un trou (28) pour le passage de vis (29) de fixation à un longeron (4).

7. Cloison (14) selon l'une des revendications précédentes, **caractérisée en ce qu'**elle est réalisée de manière monobloc dans une tôle d'acier.

8. Caisse (2) de véhicule automobile, qui comprend un longeron (4), une traverse (8) centrale et un pied (3) milieu monté sur le longeron (4) au droit de la traverse (8) centrale, **caractérisée en ce qu'**elle comprend en outre une cloison (14) selon l'une des revendications précédentes, interposée entre le pied (3) milieu et le longeron (4).

9. Caisse (2) selon la revendication 8, **caractérisé en ce que**, le longeron (4) se présentant sous forme d'un profilé à section transversale en U et comprenant une paroi (5) intérieure longitudinale, une paroi (6) inférieure et une paroi (7) supérieure s'étendant sensiblement horizontalement de part et d'autre de la paroi (5) intérieure, la cloison (14) est fixée par vissage sur la paroi (5) intérieure du longeron (4), et par soudage sur la paroi (6) inférieure et sur la paroi (7) supérieure du longeron (4).

10. Véhicule automobile comprenant une caisse (2) selon la revendication 8 ou la revendication 9.

## Patentansprüche

1. Säule (14) eines B-Fußes (3) einer Kraftfahrzeugkarosserie (1), umfassend ein Metallprofil mit einem U-förmigen horizontalen Querschnitt, das mit einer Längswand (16) und zwei gegenüberliegenden Querwänden (17) versehen ist, **dadurch gekennzeichnet, dass** jede Querwand (17) mindestens zwei übereinander liegende Lochpaare (19, 20) aufweist, die durch einen durchgehenden zentralen Materialstreifen (22) getrennt sind, der sich von einem unteren Rand (23) zu einem oberen Rand (24) der Querwand (17) erstreckt.

2. Säule (14) nach Anspruch 1, **dadurch gekennzeichnet, dass** die Löcher (19), die sich auf der Seite der Längswand (16) befinden, in eine Querrichtung länglich sind.

3. Säule (14) nach Anspruch 1 oder Anspruch 2, **dadurch gekennzeichnet, dass** die Löcher (20), die sich gegenüber der Längswand (16) befinden, in eine Vertikalrichtung länglich sind.

4. Säule (14) nach einem der vorhergehenden Ansprüche, **dadurch gekennzeichnet, dass** der untere Rand (23) jeder Querwand (17) einen rechtwinkeligen Falz (25) lotrecht auf den zentralen Materialstreifen (22) aufweist.

5. Säule (14) nach einem der vorhergehenden Ansprüche, **dadurch gekennzeichnet, dass** der obere Rand (24) jeder Querwand (17) einen rechtwinkeligen Falz (26) lotrecht auf den zentralen Materialstreifen (22) aufweist.

6. Säule (14) nach einem der vorhergehenden Ansprüche, **dadurch gekennzeichnet, dass** jede Querwand (17) gegenüber der Längswand (16) einen Innenrand (21) umfasst, der mit einem rechtwinkeligen Falz (27) versehen ist, der ein Loch (28) für den Durchgang von Schrauben (29) zur Befestigung an einem Längsträger (4) aufweist.

7. Säule (14) nach einem der vorhergehenden Ansprüche, **dadurch gekennzeichnet, dass** sie einstückig aus Stahlblech hergestellt ist.

8. Karosseriegehäuse (2) eines Kraftfahrzeugs, umfassend einen Längsträger (4), eine zentrale Querstrebe (8) und einen B-Fuß (3), die auf dem Längsträger (4) im rechten Winkel zur zentralen Querstrebe (8) montiert ist, **dadurch gekennzeichnet, dass** es ferner eine Säule (14) nach einem der vorhergehenden Ansprüche umfasst, die zwischen dem B-Fuß (3) und dem Längsträger (4) zwischengefügt ist.

9. Karosseriegehäuse (2) nach Anspruch 8, **dadurch gekennzeichnet, dass**, wobei der Längsträger (4) in Form eines Profils mit U-förmigem Querschnitt vorhanden ist und eine Längsinnenwand (5), eine untere Wand (6) und eine obere Wand (7) umfasst, die sich im Wesentlichen horizontal beiderseits der Innenwand (5) erstreckt, die Säule (14) durch Schrauben an der Innenwand (5) des Längsträgers (4) und durch Schweißen an der unteren Wand (6) und an der oberen Wand (7) des Längsträgers (4) befestigt ist.

10. Kraftfahrzeug, umfassend ein Karosseriegehäuse (2) nach Anspruch 8 oder Anspruch 9.

## Claims

1. A partition (14) of the B-pillar lower bulkhead (3) of a motor vehicle body (1) which includes a metal profile member having a U-shaped horizontal cross-section, provided with a longitudinal wall (16) and two transverse walls (17) that are opposite each other, **characterized in that** each transverse wall (17) is bored with at least two pairs of holes (19, 20), one hole placed over the other, said hole pairs being separated by a continuous central strip (22) of material that extends from a lower edge (23) to an upper edge (24) of the transverse wall (17).

2. The partition (14) according to Claim 1, **characterized in that** the holes (19) situated on the side of the longitudinal wall (16) are oblong following a transverse direction.

3. The partition (14) according to Claim 1 or Claim 2, **characterized in that** the holes (20) situated opposite the longitudinal wall (16) are oblong following a vertical direction.

4. The partition (14) according to one of the preceding claims, **characterized in that** the lower edge (23) of each transverse wall (17) has a fold (25) at right angles vertically aligned with the central strip (22) of material.

5. The partition (14) according to one of the preceding claims, **characterized in that** the upper edge (24) of each transverse wall (17) has a fold (26) at right angles vertically aligned with the central strip (22) of material.

6. The partition (14) according to one of the preceding claims, **characterized in that** each transverse wall (17) includes, opposite the longitudinal wall (16), an internal edge (21) provided with a fold (27) at right angles bored with a hole (28) for the passage of passage of attachment screws (29) to a side member (4) .

7. The partition (14) according to one of the preceding claims, **characterized in that** it is made in a one-piece manner in a steel sheet.

8. A motor vehicle body (2), which includes a side member (4), a central cross-member (8) and a B-pillar (3) mounted on the side member (4) perpendicular to the central cross-member (8), **characterized in that** it further includes a partition (14) according to one of the preceding claims, interposed between the B-pillar (3) and the side member (4).

9. The body (2) according to Claim 8, **characterized in that**, the side member (4) being in the form of a profile member having a U-shaped cross-section and including a longitudinal interior wall (5), a lower wall (6) and an upper wall (7) extending substantially horizontally on either side of the interior wall (5), the partition (14) is attached by screwing on the interior wall (5) of the side member (4), and by welding on the lower wall (6) and on the upper wall (7) of the side member (4).

10. A motor vehicle including a body (2) according to Claim 8 or Claim 9.
